Europäisches Patentamt

European Patent Office

Office européen des brevets

(11) Numéro de publication: **0 363 231 B1**

## (12) FASCICULE DE BREVET EUROPEEN

(45) Date de publication de fascicule du brevet: **27.10.93** (51) Int. Cl.⁵: **H04L 5/14**, H04L 7/04

(21) Numéro de dépôt: **89402244.1**

(22) Date de dépôt: **09.08.89**

(54) Procédé de transmission d'information sur une liaison bidirectionelle et dispositif de mise en oeuvre de ce procédé.

(30) Priorité: **31.08.88 FR 8811389**

(43) Date de publication de la demande:
**11.04.90 Bulletin 90/15**

(45) Mention de la délivrance du brevet:
**27.10.93 Bulletin 93/43**

(84) Etats contractants désignés:
**BE CH DE ES FR GB IT LI LU NL SE**

(56) Documents cités:
**CH-A- 646 826**

**PATENT ABSTRACTS OF JAPAN, vol. 12, no. 7 (E-571)[2854], 9 janvier 1988 & JP-A-62 168 415**

**PATENT ABSTRACTS OF JAPAN, vol. 3, no. 71 (E-118), 20 juin 1979 & JP-A-54 51 340**

(73) Titulaire: **BULL S.A.
Tour BULL,
1, place Carpeaux
F-92800 Puteaux(FR)**

(72) Inventeur: **Hubert, Maurice
25, avenue de la Grande Armée
F-75016 Paris(FR)**

(74) Mandataire: **Colombe, Michel et al
Bull S.A.,
Tour BULL Cédex 74,
PC/TB2803
F-92039 Paris La Défense (FR)**

## Description

La présente invention concerne un procédé de transmission d'information sous forme de signaux électriques sur une liaison bidirectionnelle utilisée notamment pour les échanges de données entre les organes centraux et les organes périphériques d'un système informatique. Dans de tels systèmes une ou plusieurs stations périphériques sont reliées à une station centrale par une ou plusieurs voies de transmission bidirectionnelle.

D'une façon générale, un signal d'information reçu doit pour être validé par le front actif d'un signal d'horloge être présent d'une part pendant un temps minimum (appelé temps de préaffichage ou "set up time" tsu) avant l'arrivée de ce front actif, et d'autre part pendant un autre temps minimum (appelé temps de maintien ou "hold time" th) après l'arrivée de ce même front actif. Par front actif, on entend une transition entre deux tensions électriques, d'un état haut vers un état bas (front descendant) ou l'inverse (front montant). Les temps tsu et th dépendent de la technologie utilisée pour la fabrication des composants électroniques, et des circuits spécifiques mis en oeuvre dans les stations lors de la réception d'information. Ces temps sont de l'ordre de 10-15 ns pour tsu et 0-5 ns pour th dans le cas d'un sous-ensemble bascule/porte-trois-états faisant appel à une technologie dite rapide ("FAST").

Par ailleurs une transmission synchrone qui fait appel à une horloge de synchronisation émise par la station centrale, est réalisée soit en mode monophase (les circuits des stations Emetteur et Récepteur sont alors synchronisés sur le même front montant [ou descendant] du signal d'horloge) soit en mode biphase (les circuits des stations Emetteur et Récepteur sont alors synchronisés sur des fronts différents montant et descendant du signal d'horloge).

De telles transmissions synchrones posent des problèmes dans le cas de liaison bidirectionnelle longue. En effet plus celle-ci est longue, à fréquence d'horloge égale, plus le décalage du signal d'horloge dans la station périphérique par rapport à la station centrale sera important pour une même impulsion. Il en résulte qu'en mode monophase le respect du th devient rapidement impossible avec l'accroissement de la longueur de la ligne. Ceci est d'autant plus délicat que l'utilisation de technologie rapide amène une réduction du temps de maintien dans un état donné, haut ou bas, des signaux côté Emetteur. Pratiquemment ce problème technique limite la longueur utile des liaisons bidirectionnelles à 50 cm; c'est à dire à une utilisation type "fond de panier" dans des systèmes informatiques. A l'inverse, en cas de transmission biphase à partir de la station centrale, on obtient un décalage de l'émission du signal de données par rapport au signal d'horloge ce qui permet de respecter aisément le th mais en contrepartie pose problème lors de la transmission d'un signal à partir de la station périphérique vers la station centrale au niveau du tsu qui très vite n'est plus respecté. Une solution imparfaite couramment utilisée consiste à réduire la fréquence de synchronisation au détriment des performances de la transmission.

Ainsi donc les liaisons bidirectionnelles relativement longues (quelques mètres) pour être performantes, nécessitent une resynchronisation à partir de l'horloge locale du récepteur par l'intermédiaire d'un circuit appelé unifieur qui, outre l'accroissement du nombre de composants (utilisation de deux horloges et circuit unifieur), introduit également un retard. Il est coutumier de considérer que l'augmentation du débit se solde toujours par un retard dans l'acheminement de l'information (débit favorisé au détriment du délai de transmission).

Pour remédier à ces inconvénients, l'invention propose un procédé de transmission d'information sous forme de signaux électriques sur une liaison bidirectionnelle entre une station centrale et une station périphérique reliée à la station centrale par une voie de transmission bidirectionnelle, ladite station centrale étant munie d'une horloge délivrant un signal de synchronisation à ladite station périphérique, le procédé étant caractérisé en ce que la synchronisation est réalisée, d'une part en mode biphase lors d'émission à partir de la station centrale, d'autre part en mode monophase lors d'émission à partir de la station périphérique.

Selon un premier cas particulier du procédé selon l'invention, la station périphérique est synchronisée à l'émission et à la réception sur le même front du signal d'horloge.

Selon un autre cas particulier du procédé selon l'invention, la station centrale émet sur le front descendant du signal d'horloge et reçoit sur le front montant dudit signal.

L'invention concerne également un dispositif pour mettre en oeuvre le procédé selon l'invention du type comportant une station centrale, une station périphérique reliée à la station centrale par une voie de transmission bidirectionnelle, ladite station centrale étant munie d'une horloge délivrant un signal de synchronisation à ladite station périphérique par l'intermédiaire d'une ligne de transmission, ledit dispositif comportant au moins un circuit élémentaire muni de bascules émission/réception, disposé dans la station centrale et relié par la ligne bidirectionnelle de transmission à un autre circuit élémentaire muni de bascules émission/réception et disposé dans la station périphérique, lesdites bascules présentant les mêmes caractéristiques de déclenchement à partir d'une entrée susceptible de recevoir un signal d'horloge généré par l'intermédiaire de ladite horloge, ledit dispositif comportant de plus des moyens permettant la synchronisation d'une part en mode biphase lors d'émission à partir de la station centrale, d'autre part en mode monophase lors d'émission à partir de la station périphérique, lesdits moyens de synchronisation comportant une porte inverseur disposée entre la sortie de l'horloge et l'entrée de l'une des deux bascules constituées parmi la bascule émission de la station centrale et la bascule réception de la station périphérique, l'entrée de l'autre desdites deux bascules étant attaquée par le signal de sortie d'horloge, les entrées des bascules réception de la station centrale et émission de la station périphérique étant attaquées par le même signal généré à partir de l'horloge.

Ainsi donc par un choix judicieux d'une transmission en mode biphase à partir de la station centrale associée à une transmission en mode monophase à partir de la station périphérique, il est possible de repousser la longueur limite acceptable de la liaison bidirectionnelle à plusieurs mètres sans pour autant avoir recours à une resynchronisation. De plus, le dispositif de mise en oeuvre de l'invention présentée ci-après montre une structure simple avec peu de composants complémentaires et donc peu onéreuse.

Un mode de réalisation de l'invention est maintenant décrit à titre d'exemple non limitatif en se référant aux dessins ci-annexés dans lesquels :

- la Figure 1 représente le schéma de principe d'un dispositif de mise en oeuvre de l'invention sur une liaison bidirectionnelle,
- et la Figure 2 représente un chronogramme illustrant les divers signaux circulant sur la liaison bidirectionnelle de la Figure 1.

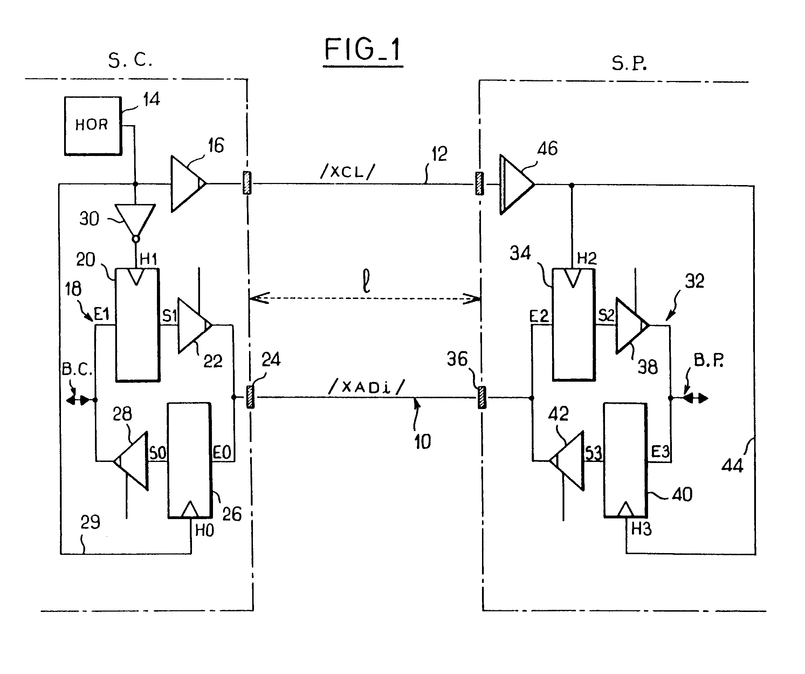

Si l'on considère la Figure 1, la liaison bidirectionnelle est constituée d'une station centrale S.C. connectée à une station périphérique S.P. par une voie bidirectionnelle 10. Cette voie bidirectionnelle 10 de longueur 1 est constituée par exemple par une voie de transmission parallèle de largeur 1 octet. Chaque ligne de la voie parallèle véhicule un signal /XADi/ où i est un entier compris entre 0 et 7. Bien entendu, selon les desiderata de l'utilisateur, la largeur de la voie peut être portée à 16 ou 32 bits et même au-delà. La liaison bidirectionnelle est utilisée par exemple dans un système informatique pour véhiculer de l'information, sous forme de signaux électriques, telle que données et/ou adresses, d'un sous-système central vers un sous-système périphérique. Les divers sous-systèmes ne sont pas représentés ni décrits à l'exception de leurs stations de transmission S.C. et S.P.. Distincte de la voie 10, est également prévue entre les deux stations, une ligne unidirectionelle de transmission du signal d'horloge, ligne 12, susceptible de délivrer à la station S.P. un signal d'horloge /XCL/ généré par une horloge de synchronisation de transmission 14 appartenant à la station S.C..

D'une façon générale, les divers composants électroniques qui vont être présentés ci-après ont été réalisés en technologie dite rapide ("FAST") qui permet des fronts de signaux assez raides de l'ordre de quelques nanosecondes. Ces composants connus dans l'industrie électronique seront, dans la description qui va suivre, identifiés par leur code usuel (tels que F04 ou 29F52).

La station centrale S.C. comporte outre l'horloge 14, un séparateur-amplificateur 16 de type F245 travaillant en émission monté entre l'horloge 14 et la ligne d'horloge 12, et un circuit de type 29F52 constitué de 8 circuits élémentaires 18 ( un circuit par bit à transmettre). Chacun des circuits élémentaires 18 comporte des bascules de mémorisation 20, 26 montées deux à deux en parallèle pour travailler l'une à l'émission (bascule 20) et l'autre à la réception (bascule 26). Si on considère la Figure 1 où seul un circuit élémentaire 18 est représenté, on peut remarquer la bascule d'émission 20 de type D avec son entrée de données E1 connectée à une des lignes B.C. d'un bus bidirectionnel interne du sous-système central et sa sortie de données S1 connectée au travers d'une porte-trois-états 22 à la jonction 24 située à l'extrémité coté S.C. de la ligne i de la voie 10. Toujours côté S.C. la bascule de réception 26, également de type D, est montée en parallèle avec la bascule 20, avec son entrée E0 connectée à la jonction 24, sa sortie S0 connectée au travers d'une porte-trois-états 28 à la ligne B.C.. Selon une caractéristique essentielle de l'invention, l'entrée d'horloge H0 de la bascule de réception 26 est reliée directement à la sortie de l'horloge 14 par la ligne 29 tandis que l'entrée d'horloge H1 de la bascule d'émission 20 est reliée à la sortie de l'horloge 14 au travers d'une porte inverseur 30 de type F04.

Coté station périphérique, les circuits utilisés sont assez voisins, sinon identiques dans certains cas. On retrouve un circuit de type 29F52 dont seul un circuit élémentaire 32 est représenté. La bascule de réception 34, de type D, a son entrée de données E2 reliée à la jonction 36 située à l'extrémité coté S.P. de la ligne i de la voie 10 et sa sortie de données S2 connectée au travers d'une porte-trois-états 38 à une ligne B.P. d'un bus bidirectionnel interne du sous-système périphérique. De même la bascule d'émission 40, de type D, a son entrée E3 connectée au bus B.P. et sa sortie S3 connectée à la jonction 36 au travers d'une porte-trois-états 42. Les entrées d'horloge H2 et H3 des bascules 34 et 40 sont reliées directement par une ligne 44 à la sortie d'un séparateur-amplificateur 46 de type F245 dont l'entrée est connectée à la ligne d'horloge 12 pour recevoir le signal /XCL/ de l'horloge 14.

Compte tenu du fait que les bascules 20, 26, 34 et 40 sont validées par des fronts montants à leur entrée d'horloge H (en fait H1, H0, H2 et H3), il résulte du circuit qui vient d'être présenté que les bascules réception 26 de la station centrale et les deux bascules 34 et 40 de la station périphérique sont synchronisées sur le front montant du signal d'horloge /XCL/ tandis que la bascule émission 20 de la station centrale est synchronisée sur le front descendant de ce même signal, en fait sur le front montant du signal complémentaire de /XCL/ et délivré à la sortie de l'inverseur 30. Ainsi on a bien un fonctionnement en mode biphase lors d'émission à partir de la station centrale et un fonctionnement en mode monophase lors d'émission à partir de la station périphérique.

Le signal d'horloge /XCL/ présente deux paramètres essentiels, sa fréquence et son rapport cyclique (c'est à dire le rapport de la durée d'impulsion sur la période totale T du signal). Le choix de ces paramètres dépend de la technologie utilisée et des caractéristiques de construction des circuits, dans le cas présent de la longueur 1 de la liaison bidirectionnelle définie entre les deux jonctions 24 et 36 de la voie 10. Le rapport cyclique du signal d'horloge est choisi sous la forme 1/N où N est un entier, préférentiellement 1/3 avec la technologie "FAST".

A titre d'exemple, le dispositif ici décrit accepte une fréquence maximale de 25 MHz (T = 38 ns) pour une longueur de liaison 1 de 50 cm et une fréquence maximale de 20 MHz (T = 48 ns) pour une longueur de liaison 1 de 1,5 mètre, dans les deux cas avec la technologie "FAST" et un rapport cyclique de 1/3.

Le dispositif qui vient d'être décrit fonctionne de la façon suivante :

Si l'on considère une transmission de données de la station centrale vers la station périphérique, la ligne 10 est alors conditionnée dans ce sens de transmission par l'envoi de signaux de commande aux entrées de validation des portes-trois-états 28 et 42. Les sorties de ces portes sont dites déconnectées par le mise en l'état de haute impédance de ces mêmes portes. Par contre les portes 22 et 38 sont maintenues en l'état de basse impédance leur permettant de délivrer à leur sortie le signal d'entrée. Après l'établissement d'un signal de données issu du bus B.C. à l'entrée E1 de la bascule d'émission 20, l'apparition du front montant du signal complémentaire de /XCL/ à l'entrée H1 de cette bascule, provoque son basculement et l'apparition à sa sortie S1 du signal de données /XADi/. Le signal /XADi/ transite alors sur la ligne i correspondante de la voie 10 pour attaquer l'entrée E2 de la bascule de réception 34 elle-même déclenchée par le front montant du signal d'horloge à son entrée H2. Ce signal de données transite par la porte-trois-états 38 pour apparaître sur la ligne correspondante du bus B.P.. Il est à noter que grace à la présence de l'inverseur 30, la transmission s'est réalisée de façon synchrone en mode biphase.

En cas de transmission de données de la station périphérique vers la station centrale, le dispositif fonctionne de façon semblable avec inversion des états haute/basse impédance des portes-trois-états. Toutefois, la transmission est réalisée de façon synchrone en mode monophase.

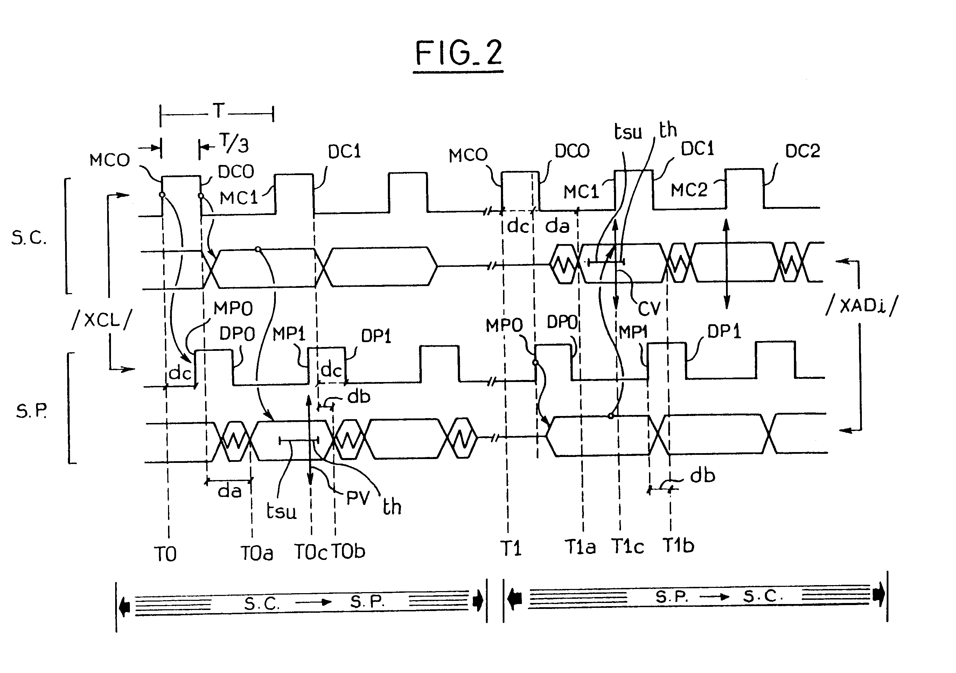

Le chronogramme de la Figure 2 illustre bien les avantages procurés par l'invention. La partie gauche de la Figure 2 illustre une transmission de données en mode biphase de la station centrale S.C. vers la station périphérique S.P. tandis que la partie droite de la Figure 2 illustre une transmission de données en mode monophase de la station périphérique S.P. vers la station centrale S.C.. Le chronogramme représente les signaux d'horloge /XCL/ et de données /XADi/ à chaque extrémité S.C. et S.P. de la liaison bidirectionnelle.

Le signal d'horloge /XCL/ de période T présente une allure générale rectangulaire avec un rapport cyclique de 1/3. Coté S.C., ce signal se présente avec ses fronts montants MC0, MC1, MCn et ses fronts descendants DC0, DC1, ... DCn. Coté S.P., le signal d'horloge apparaît décalé dans le temps d'une durée dc et se présente avec ses fronts montants MP0, MP1, ... MPn et ses fronts descendants DP0, DP1, ... DPn.

Les signaux de données /XADi/ sont synchronisés par l'horloge 14, soit à partir d'un front descendant DC de /XCL/ (émission de S.C. vers S.P.) soit à partir d'un front montant MP de /XCL/ (l'émission de S.P. vers S.C.). Toutefois, dans les deux sens de transmission, le cycle a une durée égale à une période T d'horloge. Par ailleurs à l'émission la durée de validité du signal de données est égale à une période T (les bascules d'émission sont déclenchées à chaque front actif du signal d'horloge). A la réception, le signal de données apparaît décalé dans le temps d'une durée da et disparaît décalé d'une durée db.

Si l'on considère le cas d'une transmission de S.C. vers S.P., le signal /XADi/ est émis à l'instant correspondant au front descendant du signal /XCL/ en S.C., par exemple DCO. Ce signal apparaîtra avec un décalage da (instant TOa) à l'entrée E2 de la bascule de réception 34 de S.P., pour disparaître avec un décalage db à l'instant TOb. Cette bascule validera le signal ainsi établi à l'instant TOc (correspondant au front MP1) qui correspond à l'arrivée sur S.P. du front montant du signal d'horloge associé au cycle suivant le cycle au cours duquel a été généré le signal de données concerné. Cet instant de validation est indiqué sur le signal /XADi/ par une double flèche verticale PV si l'on considère la partie gauche de la Figure 2. La flèche PV sert de référence aux temps tsu et th illustrés par deux demi-segments horizontaux. L'examen de la Figure 2 montre que par rapport au temps TO (correspondant au front MCO), on a: $TOa = T/3 + da$, $TOc = T + dc$, $TOb = T + T/3 + db$ . Le respect des temps tsu et th impose les conditions suivantes :

(1)  $TOc > TOa + tsu$ soit $2T/3 > tsu + (da-dc)$

(2)  $TOb > TOc + th$ soit $T/3 > th + (dc-db)$

Les deux conditions sont facilement respectées par les choix appropriés des caractéristiques du signal d'horloge et des composants, et sont indépendantes de la longueur de la liaison bidirectionnelle. On peut remarquer aisément qu'une transmission en mode monophase à partir de S.C. respecterait difficilement la condition sur le th car la flèche de validation PV serait décalée dans le temps de T/3 à la hauteur du front DP1. Il faudrait alors respecter la condition suivante: $db>th + dc$.

Si l'on considère le cas d'une transmission de S.P. vers S.C. (partie droite de la Figure 2), le signal /XADi/ est émis par le front MP0 avec un décalage dc par rapport à l'instant initial T1 representatif du front correspondant MC0 du signal d'horloge /XCL/ dans S.C. Ce même signal sera reçu en S.C. à l'instant T1a avec un retard total de $dc + da$ par rapport à T1 avant d'être validé à l'instant T1c (correspondant au front MC1) qui est repéré sur le signal /XADi/ par une double flèche verticale CV représentée avec les deux demi-segments horizontaux tsu et th. Ce signal disparaîtra en S.C. à l'instant T1b. Ici encore l'examen de la Figure 2 montre que par rapport au temps initial T1, on a: $T1a = dc + da$, $T1c = T$, $T1b = T + dc + db$. Le respect des temps tsu et th impose les conditions suivantes :

(3)  $T1c > T1a + tsu$ soit $T > tsu + (dc + da)$

(4)  $T1b > T1c + th$ soit $dc + db > th$

Si la condition (4) est facilement respectée par le choix approprié par rapport aux composants du circuit des durées $dc + db$ liées à la longueur minimum de la liaison bidirectionnelle, la condition (3) impose une limitation à $dc + da$ qui est donc liée à la longueur 1 de la liaison bidirectionnelle.

On peut remarquer toutefois que si la transmission de S.P. vers S.C. avait été synchronisée en mode biphase, le signal /XADi/ aurait été décalé dans le temps d'une durée T/3 ce qui aurait réduit d'autant la période de pré-établissement du signal /XADi/ avant l'arrivée du front MC1. Il en aurait résulté une pénalisation de T/3 au niveau du respect du tsu. Il aurait fallu en effet respecter la condition suivante: $2T/3 > tsu + dc + da$.

Des quatre conditions (1) à (4), seule la condition (3) lie la performance de la liaison à sa longueur. Avec les technologies les plus rapides, la limite inférieure de T est ramenée à deux fois le temps de transmission dans les lignes de liaison.

Ainsi donc le procédé de transmission selon l'invention et son dispositif de mise en oeuvre permettent d'accroître sensiblement les performances des liaisons bidirectionnelles avec un nombre réduit de composants supplémentaires, sans pour autant nécessiter de resynchronisation à partir de l'horloge locale de la station Récepteur.

Le procédé selon l'invention peut être utilisé dans divers types de transmission synchrone, série ou parallèle, notamment en mode message, sans difficulté d'adaptation particulière.

## Revendications

1.  Procédé de transmission d'information sous forme de signaux électriques, sur une liaison bidirectionnelle entre une station centrale (S.C.) et une station périphérique (S.P.) reliée à la station centrale par une voie de transmission bidirectionnelle (10), ladite station centrale (S.C.) étant munie d'une horloge (14) délivrant un signal de synchronisation à ladite station périphérique (S.P.), ladite synchronisation étant réalisée d'une part en mode biphase lors d'émission à partir de la station centrale (S.C.), d'autre part en mode monophase lors d'émission à partir de la station périphérique (S.P.).

2.  Procédé selon la revendication 1, caractérisé en ce que la station périphérique (S.P.) est synchronisée à l'émission et à la réception sur le même front du signal d'horloge.

3.  Procédé selon l'une des revendications précédentes, caractérisé en ce que la station centrale (S.C.) émet sur le front descendant du signal d'horloge et reçoit sur le front montant dudit signal.

4.  Procédé selon l'une des revendications précédentes, caractérisé en ce que le rapport cyclique du signal d'horloge est de 1/N, préférentiellement 1/3 avec la technologie "FAST".

5.  Dispositif pour mettre en oeuvre le procédé de transmission selon l'une des revendications précédentes, comportant une station centrale, une station périphérique (S.P.) reliée à la station centrale par une voie de transmission bidirectionnelle, ladite station centrale (S.C.) étant munie d'une horloge (14) délivrant un signal de synchronisation à ladite station périphérique (S.P.) par l'intermédiaire d'une ligne de transmission (12), ledit dispositif comportant au moins un circuit élémentaire (18) muni de bascules émission/réception (20,26), disposé dans la station centrale (S.C.) et relié par la ligne bidirectionnelle de transmission à un autre circuit élémentaire (32) muni de bascules émission/réception (40,34) et disposé dans la station périphérique (S.P.), lesdites bascules présentent les mêmes caractéristiques de déclenchement à partir d'une entrée (H) susceptible de recevoir un signal d'horloge généré par l'intermédiaire de ladite horloge (14), ledit dispositif comportant de plus des moyens permettant la synchronisation d'une part en mode biphase lors d'émission à partir de la station centrale (S.C.), d'autre part en mode monophase lors d'émission à partir de la station périphérique (S.P.), lesdits moyens de synchronisation comportant une porte inverseur (30) disposée entre la sortie de l'horloge (14) et l'entrée (H) de l'une des deux bascules constituées parmi la bascule émission (20,H1) de la station centrale (S.C.) et la bascule réception (34,H2) de la station périphérique (S.P.), l'entrée (H) de l'autre desdites deux bascules (20,34) étant attaquée par le signal de sortie d'horloge, les entrées (H) des bascules réception (26,H0) de la station centrale (S.C.) et émission (40,H3) de la station périphérique (S.P.) étant attaquées par le même signal généré à partir de l'horloge (14).

6. Dispositif selon la revendication 5, caractérisé en ce que la porte inverseur (30) est disposée à l'entrée (H1) de la bascule émission (20) de la station centrale.

7. Dispositif selon la revendication 6, caractérisé en ce que les deux entrées (H) de la bascule réception (26,H0) de la station centrale (S.C.) et de la bascule émission (40,H3) de la station périphérique (S.P.) sont attaquées par ledit signal de sortie de l'horloge (14).

8. Dispositif selon l'une des revendications 5 à 7, caractérisé en ce que lesdites bascules (20,26,34,40) sont de type D à déclenchement par le front montant d'un signal à leur entrée d'horloge (H) (H1,H0,H2,H3).

9. Dispositif selon l'une des revendications 5 à 8, caractérisé en ce que les sorties (S1,S0,S2,S3) desdites bascules (20,26,34,36) sont contrôlées par des portes-trois-états (22,28,38,42) elles-mêmes commandées par les fronts montants de signaux synchronisés à partir de l'horloge (14).

10. Dispositif selon l'une des revendications 5 à 9, caractérisé en ce que la ligne de transmission (12) du signal d'horloge est munie de deux séparateur-amplificateurs, le premier (16) utilisé en émission côté station centrale (S.C.), le second (46) utilisé en réception côté station périphérique (S.P.).

## Claims

1. A method of transmitting data in the form of electrical signals, over a bidirectional link between a central station (S. C.) and a peripheral station (S. P.) connected to the central station by a bidirectional transmission bus (10), said central station (S. C.) being provided with a clock (14) furnishing a synchronizing signal to said peripheral station (S. P.), the synchronization being performed on one hand in a biphase mode upon transmission from the central station (S. C.) and on the other hand in a monophase mode upon transmission from the peripheral station (S. P.).

2. A method according to claim 1, characterized in that the peripheral station (S. P.) is synchronized upon transmission and reception to the same edge of the clock signal.

3. A method according to one of the preceding claims, characterized in that the central station (S. C.) transmits at the falling edge of the clock signal and receives at the rising edge of this signal.

4. A method according to one of the preceding claims, characterized in that the cyclic ratio of the clock signal is 1/N, preferably 1/3 with fast technology.

5. An apparatus for carrying out a method of transmitting according to one of the preceding claims including a central station, a peripheral station (S. P.) connected to the central station via a bidirectional transmission bus, said central station (S. C.) being provided with a clock (14) furnishing a synchronizing signal to said peripheral station (S. P.) via a transmission line (12), said apparatus including at least one elementary circuit (18) provided with transmission and reception multivibrators (20,26) disposed in the central station (S. C.) and connected via a bidirectional transmission line to another elementary circuit (32) provided with transmission and reception multivibrators (40,34) and disposed in the peripheral station (S. P.), said multivibrators having the same characteristics of triggering from an input H capable of receiving a clock signal generated via said clock (14), said apparatus further comprising means permitting synchronization one on hand in a biphase mode upon transmission from the central station (S. C.) and on the other hand in a monophase mode upon transmission from the peripheral station (S. P.), said synchronizing means including a NOT gate (30) disposed between the output of the clock (14) and the input (H) of one of the two multivibrators among the transmission multivibrator (20, H1) of the central station (S C.) and the reception multivibrator (34, H2) of the peripheral station (S. P.) the input (H) of the other one of said two multivibrators (20,34) being driven by the clock output signal, the inputs (H) of the reception multivibrator (26, H0) of the central station (S. C.) and the transmission multivibrator (40, H3) of the peripheral station (S. P.) being driven by the same signal generated from the clock (14).

6. An apparatus according to claim 5, characterized in that the NOT gate (30) is disposed at the input H1 of the transmission multivibrator (20) of the central station.

7. An apparatus according to claim 6, characterized in that the two inputs (H) of the reception multivibrator (26, HO) of the central station (S. C.) and of the transmission multivibrator (40, H3) of the peripheral station (S. P.) are driven by said output signal of the clock (14).

8. An apparatus according to one of claims 5 to 7, characterized in that said multivibrators (20,26,34,40) are of the D type with triggering by the rising edge of a signal at their clock input (H) (H1, H0, H2, H3).

9. An apparatus according to one of claims 5 to 8, characterized in that the outputs (S1, S0, S2, S3) of said multivibrators (20,26,34,40) are controlled by tristate gates (22,28,38,42) which in turn are controlled by the rising edges of signals synchronized from the clock (14).

10. An apparatus according to one of claims 5 to 9, characterized in that the line (12) for transmission of the clock signal is provided with two separator amplifiers, the first (16) used in transmission at the central station (S. C.) and the second (46) used in reception at the peripheral station (S. P.).

**Patentansprüche**

1. Verfahren zur Übertragung von Information in Form von elektrischen Signalen über eine bidirektionale Verbindung zwischen einer Zentralstation (S.C.) und einer Außenstation (S.P.), welche mit der Zentralstation über einen bidirektionalen Übertragungsweg (10) verbunden ist, wobei die Zentralstation (S.C.) mit einem Taktgeber (14) versehen ist, der an die Außenstation (S.P.) ein Synchronisationssignal liefert, wobei die Synchronisation einerseits beim Senden von der Zentralstation (S.C.) zweiphasig und andererseits beim Senden von der Außenstation (S.P.) einphasig verwirklicht ist.

2. Verfahren gemäß Anspruch 1, dadurch gekennzeichnet, daß die Außenstation (S.P.) beim Senden und beim Empfang mit derselben Flanke des Taktsignals synchronisiert wird.

3. Verfahren gemäß einem der vorangehenden Ansprüche, dadurch gekennzeichnet, daß die Zentralstation (S.C.) bei der Abstiegsflanke des Taktsignals sendet und bei der Anstiegsflanke des Signals empfängt.

4. Verfahren gemäß einem der vorangehenden Ansprüche, dadurch gekennzeichnet, daß das Tastverhältnis des Taktsignals 1/N und mit der "FAST"-Technologie vorzugsweise 1/3 ist.

5. Anordnung für die Ausführung des Übertragungsverfahrens gemäß einem der vorangehenden Ansprüche, mit einer Zentralstation und einer mit der Zentralstation über einen bidirektionalen Übertragungsweg verbundenen Außenstation (S.P.), wobei die Zentralstation (S.C.) mit einem Taktgeber (14) versehen ist, der an die Außenstation (S.P.) über eine Übertragungsleitung (12) ein Synchronisationssignal liefert, wobei die Anordnung wenigstens eine Elementarschaltung (18) aufweist, die mit Sende-/Empfangs-Kippschaltungen (20, 26) versehen, in der Zentralstation (S.C.) angeordnet und über die bidirektionale Übertragungsleitung mit einer anderen Elementarschaltung (32) verbunden ist, welche mit Sende-/Empfangs-Kippschaltungen (40, 34) versehen und in der Außenstation (S.P.) angeordnet ist, wobei die Kippschaltungen die gleichen Trigger-Charakteristiken in bezug auf einen Eingang (H) aufweisen, welcher ein vom Taktgeber (14) erzeugtes Taktsignal empfangen kann, wobei die Anordnung außerdem Mittel aufweist, mit denen einerseits beim Senden von der Zentralstation (S.C.) eine zweiphasige Synchronisation und andererseits beim Senden von der Außenstation (S.P.) eine einphasige Synchronisation möglich ist, wobei die Synchronisationsmittel ein Inverter-Gatter (30) enthalten, das zwischen dem Ausgang des Taktgebers (14) und dem Eingang (H) einer der beiden Kippsehaltungen angeordnet ist, die durch die Sende-Kippschaltung (20, H1) der Zentralstation (S.C.) und durch die Empfangs-Kippschaltung (34, H2) der Außenstation (S.P.) gebildet sind, wobei der Eingang (H) der anderen der beiden Kippsehaltungen (20, 34) mit dem Signal des Taktausgangs beaufschlagt wird, wobei die Eingänge (H) der Empfangs-Kippschaltung (26, H0) der Zentralstation (S.C.) und der Sende-Kippschaltung (40, H3) der Außenstation (S.P.) mit demselben vom Taktgeber (14) erzeugten Signal beaufschlagt werden.

6. Anordnung gemäß Anspruch 5, dadurch gekennzeichnet, daß das Inverter-Gatter (30) am Eingang (H1) der Sende-Kippschaltung (20) der Zentralstation angeordnet ist.

7. Anordnung gemäß Anspruch 6, dadurch gekennzeichnet, daß die beiden Eingänge (H) der Empfangs-Kippschaltung (26, H0) der Zentralstation (S.C.) und der Sende-Kippschaltung (40, H3) der Außenstation (S.P.) mit dem erwähnten Ausgangssignal des Taktgebers (14) beaufschlagt werden.

8. Anordnung gemäß einem der Ansprüche 5 bis 7, dadurch gekennzeichnet, daß die genannten Kippschaltungen (20, 26, 34, 40) vom Typ D sind, die mit der Anstiegsflanke eines Signals an ihrem Takteingang (H) (H1, H0, H2, H3) getriggert werden.

9. Anordnung gemäß einem der Ansprüche 5 bis 8, dadurch gekennzeichnet, daß die Ausgänge (S1, S0, S2, S3) der genannten Kippschaltungen (20, 26, 34, 36) durch Gatter mit drei Zuständen (22, 28, 38, 42) gesteuert werden, die ihrerseits durch die Anstiegsflanken der mittels des Taktgebers (14) synchronisierten Signale gesteuert werden.

10. Anordnung gemäß einem der Ansprüche 5 bis 9, dadurch gekennzeichnet, daß die Übertragungsleitung (12) des Taktsignals mit zwei Trenner-Verstärkem versehen ist, wovon der erste (16) für die Sendung auf seiten der Zentralstalion (S.C.) und der zweite (46) für den Empfang auf seiten der Außenstation (S.P.) verwendet wird.

FIG_1

S.C.

S.P.

HOR — 14

16

/XCL/ — 12

46

30

34 — H2

32

20 — H1

18

E1    S1    22

ℓ

E2    S2    38

B.C.

24

/XADi/

36

B.P.

28    S0    E0

10

42    S3    E3

44

29

26    H0

40    H3

EP 0 363 231 B1

9

# FIG. 2

EP 0 363 231 B1